# EUROPÄISCHE PATENTANMELDUNG

(11) **EP 1 306 346 A1**
(43) Veröffentlichungstag der Anmeldung: **02.05.2003**
(21) Anmeldenummer: 02023930.7
(22) Anmeldetag: 25.10.2002
(51) Int. Cl.: B67D 1/12, B67D 5/02, B65B 69/00, B29C 31/02

(54) **Vorrichtung zum Fördern einer pastösen Substanz aus einem Gebinde in eine weiter-führende Leitung und Verfahren zum Betreiben der Vorrichtung**

(30) Priorität: 29.10.2001 DE 10154681
(71) Anmelder: Lenhardt Maschinenbau GmbH, D-75242 Neuhausen-Hamberg (DE)
(72) Erfinder: Schuler, Peter, 75233 Tiefenbronn-Lehningen (DE)
(74) Vertreter: Twelmeier, Ulrich, Dipl.Phys.

(57) **Zusammenfassung**

Vorrichtung zum Fördern einer pastösen Substanz aus einem Gebinde (11) in eine weiterführende Leitung (28), insbesondere einer thermoplastischen Substanz oder einer Komponente eines Zweikomponenten-Klebstoffes für die Herstellung von Isolierglasscheiben,
- mit einer Pumpe (1-10), welche an das Gebinde (11) anschließbar ist,
- mit einer ersten Kolben-Zylinder-Einheit (18), mit deren Zylinder (17) die Pumpe (1-10) verbunden ist und in welchen sie die pastöse Substanz fördert, wobei zwischen der Pumpe (1-10) und dem Zylinder (17) ein Absperrventil (13) vorgesehen ist und die weiterführende Leitung (28) mittelbar oder unmittelbar von dem Zylinder (17) ausgeht.

Erfindungsgemäß ist vorgesehen, daß die Pumpe (1-10) mittels einer Zweigleitung (25) außerdem an einen Reservespeicher (26) angeschlossen ist, welcher einen mittelbar oder unmittelbar mit der weiterführenden Leitung (28) verbundenen Speicherraum (31) hat, dessen Fassungsvermögen klein ist gegen das Fassungsvermögen des Gebindes (11) und welcher beim Wechseln des Gebindes (11) geleert werden kann.

## Beschreibung

Die Erfindung geht von einer Vorrichtung zum Fördern einer pastösen Substanz mit den im Oberbegriff des Patentanspruchs 1 angegebenen Merkmalen aus. Eine solche Vorrichtung ist durch Benutzung bekannt geworden. Eine Pumpe, welche in einer solchen Vorrichtung verwendet werden kann, um die pastöse Substanz aus einem Gebinde, insbesondere aus einem Faß, herauszupumpen und einer weiterführenden Leitung zuzuführen, welche an einer Düse endet, ist aus der EP 0 819 509 A2 bekannt. Bei der bekannten Pumpe handelt es sich um eine als Kolbenpumpe ausgebildete Faßpumpe, mit welcher ein pastöser Kunststoff, insbesondere ein thermoplastischer Kunststoff auf Butylkautschukbasis, aus einem Faß in eine weiterführende Leitung gefördert wird. Die Vorrichtung hat ein Gestell, auf welches das die pastöse Substanz enthaltende Faß gestellt wird. Am Gestell ist als Kolben der Faßpumpe eine kreisrunde Platte aufgehängt, welche nach dem Öffnen des Fasses auf die zu pumpende pastöse Substanz gelegt wird. Um die Pumpbarkeit der Substanz zu verbessern, kann die Platte beheizt werden. Die Wärme wird durch die Unterseite der Platte in die pastöse Substanz eingeleitet. Durch die Beheizung wird die Zähigkeit der Substanz herabgesetzt und seine Fließfähigkeit erhöht. Durch eine oberhalb der Platte angeordnete weitere Pumpe kann die pastöse Substanz leichter angesaugt und in die weiterführende Leitung gefördert werden. Zu diesem Zweck befindet sich bei der bekannten Vorrichtung an der Unterseite der als Kolben dienenden Platte eine sich konisch nach oben verengende Ausnehmung, an deren am weitesten obenliegenden Stelle eine Öffnung vorgesehen ist, durch welche die erwärmte pastöse Substanz aus dem Faß austritt. Die Platte folgt dem sinkenden Niveau der pastösen Substanz im Faß und wird deshalb auch als "Folgeplatte" bezeichnet. Sie wird zur Unterstützung des Pumpvorganges durch hydraulische Zylinder beaufschlagt, welche einen Bestandteil des Gestells bilden, welches das Faß aufnimmt. Diese Anordnung aus einer Folgeplatte, aus dem Gestell mit den hydraulischen Zylindern, welche die Folgeplatte beaufschlagen, und dem Faß, in welches die Folgeplatte eintaucht, bildet eine Kolbenpumpe, deren Kolben die Folgeplatte ist. Ist die Folgeplatte am Boden des Fasses angekommen, ist ein Faßwechsel fällig. Dazu wird die Folgeplatte von den hydraulischen Zylindern des Gestells aus dem Faß herausgehoben, woraufhin das leer gepumpte Faß aus dem Gestell entfernt werden kann. Während des Faßwechsels ist bei der bekannten Vorrichtung die Zufuhr der pastösen Substanz in die weiterführende Leitung unterbrochen und eine Maschine, welche die pastöse Substanz verarbeiten soll und welcher eine solche Vorrichtung zugeordnet ist, kann während des Faßwechsels deshalb nicht arbeiten. Das Problem tritt besonders bei Maschinen zum Beschichten von metallischen Abstandhalterrahmen für Isolierglasscheiben mit einem Klebstoff, insbesondere auf Butylkautschukbasis, oder bei Maschinen zum Extrudieren eines plastischen Abstandhalters für Isolierglasscheiben auf. Eine Betriebsunterbrechung ist bei solchen Maschinen besonders unerwünscht, weil sie Bestandteil einer größeren Isolierglasfertigungslinie sind.

Der vorliegenden Erfindung liegt die **Aufgabe** zugrunde, einen Weg aufzuzeigen, wie mit Vorrichtungen der eingangs genannten Art Betriebsunterbrechungen mit geringerem Aufwand vermieden werden können.

Diese Aufgabe wird gelöst durch eine Vorrichtung mit den im Patentanspruch 1 angegebenen Merkmalen. Vorteilhafte Weiterbildungen der Erfindung sind Gegenstand der Unteransprüche.

Die erfindungsgemäße Vorrichtung hat zum Fördern einer pastösen Substanz aus einem Gebinde in eine weiterführende Leitung, insbesondere zum Fördern einer thermoplastischen Substanz oder einer Komponente eines Zwei-Komponenten-Klebstoffes für die Herstellung von Isolierglasscheiben,
eine Pumpe, welche an das Gebinde anschließbar ist,
eine erste Kolben-Zylinder-Einheit, mit deren Zylinder die Pumpe mittelbar oder unmittelbar verbunden ist und in welche sie die pastöse Substanz fördert;
dabei ist zwischen der Pumpe und dem Zylinder ein Absperrventil vorgesehen und die weiterführende Leitung geht von dem Zylinder der ersten Kolben-Zylinder-Einheit aus;
erfindungsgemäß ist die Pumpe mittels einer Zweigleitung außerdem an einen Reservespeicher angeschlossen, welcher einen Speicherraum hat, der mittelbar oder unmittelbar mit der weiterführenden Leitung verbunden ist und beim Wechseln des Gebindes geleert werden kann. Dabei soll das Fassungsvermögen des Speicherraums klein sein, verglichen mit dem Fassungsvermögen des Gebindes auf dessen Entleerung die Vorrichtung eingerichtet ist.

Die weiterführende Leitung führt zu einer Verbrauchsstelle; dabei kann es sich insbesondere um eine Düse handeln, mit welcher die pastöse Substanz auf einen Abstandhalter für Isolierglasscheiben oder auf eine Glastafel aufgetragen werden kann.

Das Gebinde ist vorzugsweise ein zylindrisches Faß und die mit dem Faß zusammenarbeitende Pumpe ist vorzugsweise eine als Kolbenpumpe ausgebildete Faßpumpe in der Art, wie sie aus der EP 0 819 509 A1 bekannt ist, deren Kolben in seinem Durchmesser dem Durchmesser des Fasses angepaßt ist, so daß er in das an seinem einen Ende geöffnete Faß eindringen und die pastöse Substanz durch einen im Kolben vorgesehenen Durchgang aus dem Faß pressen kann. Es gibt aber auch andere Gebinde, die für Zwecke der Erfindung verwendbar sind und mit einer ihnen angepaßten Pumpe zusammen arbeiten. Zum Beispiel kann als Gebinde ein Sack verwendet werden, welcher hängend leer gepumpt wird. Als Beispiel wird auf die AT-Auslegeschrift 2436/93 verwiesen.

Die an das Gebinde anschließbare Pumpe ist mit dem Zylinder der ersten Kolben-Zylinder-Einheit verbunden, aus welchem die Substanz in die weiterführende Leitung gepreßt werden kann. Der Zylinder der ersten Kolben-Zylinder-Einheit kann aus dem Gebinde laufend nachgefüllt werden, so daß ein unterbrechungsfreies Auspressen der Substanz aus dem Zylinder der ersten Kolben-Zylinder-Einheit möglich ist. Zwischen der ersten Kolben-Zylinder-Einheit und dem Gebinde ist ein Absperrventil vorgesehen, welches jedenfalls dann geschlossen wird, wenn das Gebinde ausgetauscht werden soll.

Vor einem Austausch des Gebindes wird der Reservespeicher mit der pastösen Substanz gefüllt, wozu die an das Gebinde angeschlossene Pumpe mittels einer Zweigleitung zusätzlich an den Reservespeicher angeschlossen ist. Der Reservespeicher hat einen Speicherraum, dessen Fassungsvermögen klein ist gegen das Fassungsvermögen des Gebindes und welcher beim Wechseln des Gebindes geleert werden kann, so daß auch während des Wechselns des Gebindes noch eine kleine Reservemenge der Substanz zur Verfügung steht, welche in die weiterführende Leitung gefördert werden kann. Die weiterführende Leitung ist zu diesem Zweck mittelbar oder unmittelbar mit dem Speicherraum des Reservespeichers verbunden. Das Fassungsvermögen des Reservespeichers braucht nur so groß zu sein, daß während der gesamten Zeitspanne, welche für das Wechseln des Gebindes erforderlich ist, die pastöse Substanz weiterhin in die weiterführende Leitung gefördert werden kann. Für das Wechseln eines Fasses ist typisch eine Zeitspanne von 15 Minuten ausreichend.

Das dafür benötigte Fassungsvermögen des Reservespeichers ist verglichen mit dem typischen Fassungsvermögen eines Gebindes von zum Beispiel 200 Liter so klein, daß der zusätzliche bauliche und konstruktive Aufwand, der für eine Installation des Reservespeichers im Zusammenhang mit einer gattungsgemäßen Fördervorrichtung erforderlich ist, vergleichsweise klein ist. Verglichen mit der Möglichkeit, zwei gleiche Gebinde vorzusehen, zum Beispiel zwei Fässer, welche im Wechsel geleert werden können, ist der für die Erfindung zu treibende Aufwand nur klein, denn die Faßpumpe mit ihrer beheizbaren Folgeplatte als Kolben und die darüber angeordnete erste Kolben-Zylinder-Einheit zum Auspressen der von der Faßpumpe gelieferten pastösen Substanz, das Absperrventil zwischen dem Faß und der ersten Kolben-Zylinder-Einheit und die zugehörigen Antriebsaggregate werden nur einmal benötigt. Das für den Reservespeicher erforderliche Fassungsvermögen ist so klein, daß der Reservespeicher neben der ersten Kolben-Zylinder-Einheit auf dem Kolben (Folgeplatte) der Faßpumpe angeordnet werden kann.

Der Reservespeicher ist vorzugsweise durch eine zweite Kolben-Zylinder-Einheit gebildet. Aus ihr kann die pastöse Substanz bei Bedarf unmittelbar in die weiterführende Leitung gepreßt werden. Günstiger ist es, den Speicherraum des Reservespeichers mit dem Zylinder der ersten Kolben-Zylinder-Einheit zu verbinden. Das macht es nämlich möglich, die pastöse Substanz zunächst in den Zylinder der ersten Kolben-Zylinder-Einheit zu überführen und ihn erst von dort aus in die weiterführende Leitung zu pressen. Das ist deshalb vorteilhaft, weil dann nur die erste Kolben-Zylinder-Einheit entsprechend den vorgegebenen Dosieranforderungen steuerbar sein muß, nicht aber auch die den Reservespeicher bildende zweite Kolben-Zylinder-Einheit. Außerdem kann der Antrieb der zweiten Kolben-Zylinder-Einheit schwächer ausgelegt werden als der Antrieb der ersten Kolben-Zylinder-Einheit, weil der Strömungswiderstand zwischen der zweiten Kolben-Zylinder-Einheit und der ersten Kolben-Zylinder-Einheit durch kürzere Wege und größere Leitungsquerschnitte wesentlich geringer gehalten werden kann als zwischen der ersten Kolben-Zylinder-Einheit und der Verbrauchsstelle (Düse) am vorderen Ende der weiterführenden Leitung.

Die von der Pumpe zum Reservespeicher führende Zweigleitung geht vorzugsweise von dem Absperrventil aus, welches zwischen der Pumpe und der ersten Kolben-Zylinder-Einheit angeordnet ist. Das trägt zu einer kompakten Bauweise der Vorrichtung bei, die dann besonders einfach und preisgünstig ist, wenn das Absperrventil ein Drehschieberventil ist, welches einen ersten Kanal hat, welcher quer zur Drehachse des Drehschiebers verläuft und in seiner Offenstellung das Gebinde mit dem Zylinder der ersten Kolben-Zylinder-Einheit verbindet, und einen zweiten Kanal hat, welcher koaxial zur Drehachse des Drehschiebers in diesem verläuft und den ersten Kanal mit dem Reservespeicher verbindet. Ein solches Drehschieberventil kann aus einem herkömmlichen Drehschieberventil erzeugt werden, indem man dessen Drehschieber vom einen Ende her axial aufbohrt, bis man auf den ersten Kanal trifft, welcher quer zur Drehachse des Drehschiebers in diesem verläuft. Das aufgebohrte Ende des Drehschiebers mündet dann in die zum Reservespeicher führende Zweigleitung.

Zweckmäßigerweise liegt zwischen dem Zylinder der ersten Kolben-Zylinder-Einheit und der weiterführenden Leitung ein Rückschlagventil, welches in Richtung gegen den Zylinder der ersten Kolben-Zylinder-Einheit sperrt und beim Zurückziehen des Kolbens während des Nachfüllens der ersten Kolben-Zylinder-Einheit verhindert, daß ein Teil der pastösen Substanz aus der weiterführenden Leitung zurückgesaugt wird. Außerdem ist es zweckmäßig, wenn zwischen dem Zylinder der ersten Kolben-Zylinder-Einheit und dem Reservespeicher ein zweites Rückschlagventil liegt, welches in Richtung gegen den Reservespeicher sperrt und verhindert, daß beim Auspressen der pastösen Substanz aus der ersten Kolben-Zylinder-Einheit ein Teil der pastösen Substanz in den Reservespeicher gelangt.

Vorzugsweise wird der Reservespeicher erst dann gefüllt, wenn die pastöse Substanz in dem Gebinde zur Neige geht, so daß die pastöse Substanz nur eine kurze Verweildauer in dem Reservespeicher hat. Das wirkt Alterungserscheinungen entgegen und spart, wenn die Substanz nur erwärmt gefördert werden kann, Heizkosten, weil die Substanz schon im Gebinde erwärmt wird und erwärmt in den Reservespeicher gelangt. Ist der Reservespeicher gefüllt, kann das Absperrventil in seine Schließstellung überführt und das entleerte Gebinde ausgewechselt werden.

Ein bevorzugtes Ausführungsbeispiel der Erfindung ist in den beigefügten Zeichnungen dargestellt und wird nachfolgend beschrieben.
- Figur 1: zeigt eine schematische Gesamtansicht der Vorrichtung mit einem Faß als Gebinde, und
- Figur 2: zeigt im Detail die wesentlichen Elemente der Vorrichtung, mit Ausnahme der Faßpumpe, in einer teilweise geschnittenen Seitenansicht.

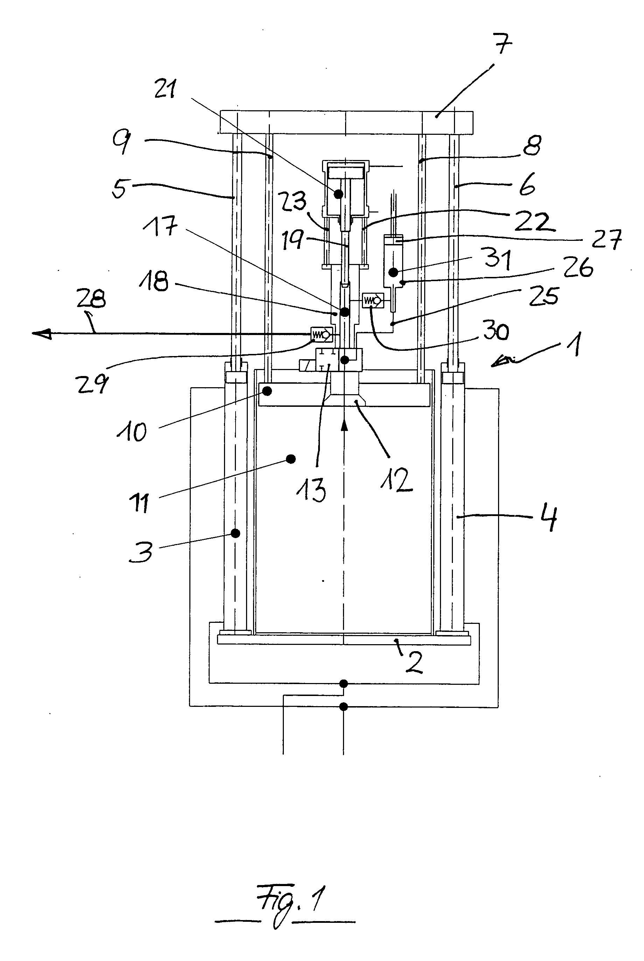

Die dargestellte Vorrichtung hat ein Gestell 1 mit einer Fußplatte 2, auf welcher zwei Hydraulikzylinder 3 und 4 aufrechtstehend verankert sind. Die Hydraulikzylinder 3 und 4 sind an ihrem oberen Ende durch eine nicht dargestellte Traverse miteinander verbunden, welche sie stabilisiert. Aus den Hydraulikzylindern 3 und 4 führen Kolbenstangen 5 und 6 heraus, welche durch eine weitere waagerechte Traverse 7 miteinander verbunden sind, an welcher mittels Zugstangen 8 und 9 eine Folgeplatte 10 aufgehängt ist, welche kreisrund ist und einen Außendurchmesser hat, welcher auf den Innendurchmesser eines als zylindrisches Faß ausgebildeten Gebindes 11 abgestimmt ist, so daß die Folgeplatte mit Hilfe von einer oder mehreren Dichtungen, die an ihrem Umfang vorgesehen, in Figur 1 aber nicht dargestellt sind, im Kontakt mit der inneren Umfangswand des Fasses 11 an dieser abwärts gleiten kann.

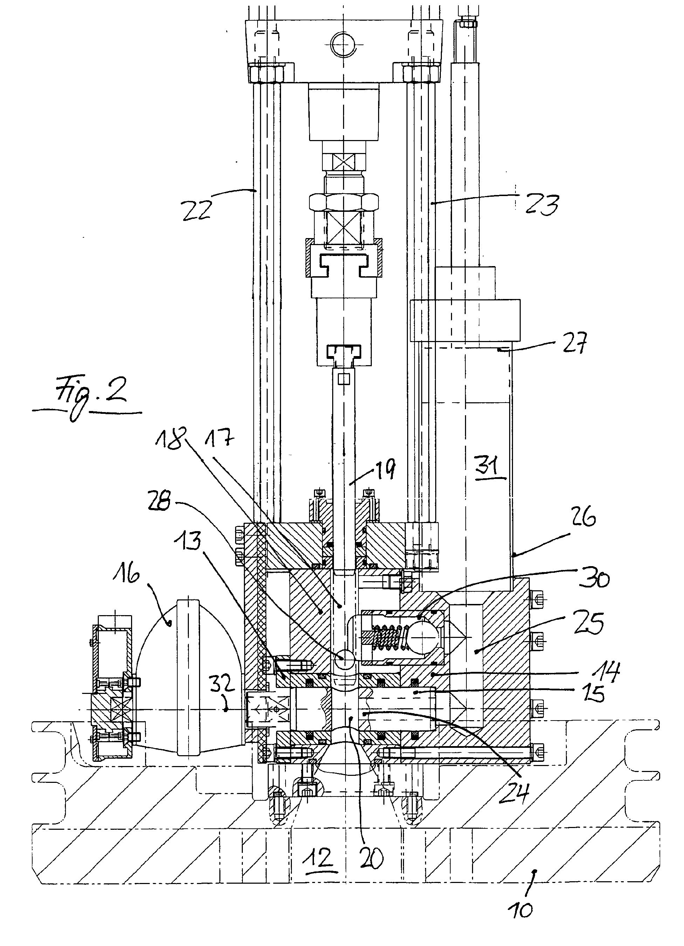

Die Folgeplatte 10 bildet zusammen mit der Fußplatte 2, den Hydraulikzylindem 3 und 4, den Kolbenstangen 5 und 6, der Traverse 7 und den Zugstangen 8 und 9 eine Kolbenpumpe deren Kolben die Folgeplatte 10 ist. Sie hat einen zentralen Durchgang 12, welcher in ein als 4/2-Wege-Ventil ausgebildetes Absperrventil 13 mündet, welches als Drehschieberventil ausgebildet und in Figur 2 näher dargestellt ist.

Das Absperrventil 13 hat ein Gehäuse 14, in welchem ein Drehschieber 15 gelagert ist. Der Drehschieber 15 ist durch einen pneumatischen Drehantrieb 16, zum Beispiel einen Drehflügelzylinder, aus der in Figur 2 dargestellten Offenstellung um 90° in eine Schließstellung drehbar. In der Offenstellung hat der Durchgang 12 in der Folgeplatte 10 Verbindung mit dem Zylinder 17 einer ersten Kolben-Zylinder-Einheit 18; diese Verbindung wird hergestellt durch einen ersten Kanal 20, welcher den Drehschieber 15 quer durchsetzt. Die erste Kolben-Zylinder-Einheit 18 hat einen Kolben 19, welcher mittels eines Pneumatikzylinders 21 verstellbar ist, welcher mit Zugstangen 22, 23 mit dem Gehäuse der ersten Kolben-Zylinder-Einheit 18 verbunden ist.

Vom ersten Kanal 20 zweigt ein zweiter Kanal 24 ab, welcher im Drehschieber 15 koaxial zu dessen Drehachse 32 verläuft und in eine Zweigleitung 25 mündet, welche zu einer zweiten Kolben-Zylinder-Einheit 26 führt, welche neben der ersten Kolben-Zylinder-Einheit 18 angeordnet ist und einen Reservespeicher darstellt. Die zweite Kolben-Zylinder-Einheit 26 hat ebenfalls einen pneumatisch betätigten Kolben 27, doch ist die pneumatische Antriebseinheit dazu nicht dargestellt.

Von dem Zylinder 17 der ersten Kolben-Zylinder-Einheit 18 geht eine weiterführende Leitung 28 aus, in deren hinterem Ende, der ersten Kolben-Zylinder-Einheit 18 benachbart, ein erstes Rückschlagventil 29 liegt, welches in Richtung zur ersten Kolben-Zylinder-Einheit 18 sperrt. Ein zweites Rückschlagventil 30 liegt in einer kurzen Verbindungsleitung zwischen der Zweigleitung 25 und dem Zylinder 17 der ersten Kolben-Zylinder-Einheit 18; dieses zweite Rückschlagventil 30 sperrt in Richtung gegen die Zweigleitung 25.

Die Vorrichtung arbeitet wie folgt:

Bei gefülltem Faß 11 liegt die Folgeplatte 10 auf der im Faß 11 befindlichen pastösen Substanz und preßt diese durch ihr Gewicht, unterstützt durch die Hydraulikzylinder 3 und 4, bei zurückweichendem Kolben 19 und geöffnetem Absperrventil 13 in den Zylinder 17 der ersten Kolben-Zylinder-Einheit 18 sowie durch die Zweigleitung 25 in den Speicherraum 31 des Reservespeichers 26, vorausgesetzt daß sich der Kolben 27 zurückzieht. Vorzugsweise wird der Kolben 27 jedoch zunächst in seiner vorderen Endlage gehalten.

Durch Einwirken des Pneumatikzylinders 21 auf die Kolbenstange 19 wird die pastöse Substanz aus dem Zylinder 17 über das erste Rückschlagventil 29 in die weiterführende Leitung 28 gepreßt. Der Kolben 19 kann die Substanz aber nicht in den Reservespeicher 26 pressen, weil dieses durch das zweite Rückschlagventil 30 verhindert wird.

Geht der Vorrat der pastösen Substanz im Gebinde 11 zur Neige, was an der Stellung der Traverse 7 oder der Kolbenstangen 5 und 6, zum Beispiel mit Hilfe von Lagesensoren, abgelesen werden kann, dann wird der Kolben 27 im Reservespeicher 26 zurückbewegt, so daß sich der Reservespeicher 26 füllen kann. Schlägt die Folgeplatte 10 danach am Boden des Gebindes 11 an, wird das Absperrventil 13 geschlossen und der Wechsel des Gebindes 11 kann beginnen. Während dieser Zeit wird der Zylinder 17 aus dem Reservespeicher 26 gespeist, wozu dessen Kolben 27 vorgeschoben wird und die pastöse Substanz über das zweite Rückschlagventil 30 in den Zylinder 17 der ersten Kolben-Zylinder-Einheit 18 verdrängt. Aus diesem wird die pastöse Substanz wie zuvor mit Hilfe des Pneumatikzylinders 21 in die weiterführende Leitung 28 gepreßt. Wenn der Kolben 27 in seiner vorderen Endstellung angelangt ist, so daß der Reservespeicher 26 entleert ist, dann wird das Absperrventil 13 erneut geöffnet und die erste Kolben-Zylinder-Einheit 18 erhält ihre pastöse Substanz aus dem zwischenzeitlich angeschlossenen vollen Gebinde.

Das Absperrventil 13 samt ihrer pneumatischen Betätigungseinheit 16, die erste Kolben-Zylinder-Einheit 18 samt ihrem Pneumatikzylinder 21 und der Reservespeicher 26 mit seiner nicht dargestellten pneumatischen Antriebseinheit sind sämtlich auf der Folgeplatte 10 montiert und bewegen sich mit dieser in das Gebinde 11 hinein und vor dem Wechsel des Gebindes 11 aus diesem wieder hinaus. Nach einem Wechsel des Gebindes 11 wird der Kolben 27 im Reservespeicher 26 vorzugsweise in seiner vorderen Endstellung belassen, bis die pastöse Substanz im Gebinde 11 erneut zur Neige geht.

### Bezugszahlenliste:

- 1: Gestell
- 2: Fußplatte
- 3: Hydraulikzylinder
- 4: Hydraulikzylinder
- 5: Kolbenstange
- 6: Kolbenstange
- 7: Traverse
- 8: Zugstange
- 9: Zugstange
- 10: Kolben (Folgeplatte)
- 11: Gebinde
- 12: Durchgang
- 13: Absperrventil (4/2-Wege-Ventil)
- 14: Gehäuse
- 15: Drehschieber
- 16: Drehantrieb
- 17: Zylinder
- 18: erste Kolben-Zylinder-Einheit
- 19: Kolben
- 20: erster Kanal
- 21: Pneumatikzylinder
- 22: Zugstange
- 23: Zugstange
- 24: zweiter Kanal
- 25: Zweigleitung
- 26: Reservespeicher (zweite Kolben-Zylinder-Einheit)
- 27: Kolben
- 28: weiterführende Leitung
- 29: erstes Rückschlagventil
- 30: zweites Rückschlagventil
- 31: Speicherraum
- 32: Drehachse

## Patentansprüche

1. Vorrichtung zum Fördern einer pastösen Substanz aus einem Gebinde (11) in eine weiterführende Leitung (28), insbesondere einer thermoplastischen Substanz oder einer Komponente eines Zweikomponenten-Klebstoffes für die Herstellung von Isolierglasscheiben,
- mit einer Pumpe (1-10), welche an das Gebinde (11) anschließbar ist,
- mit einer ersten Kolben-Zylinder-Einheit (18), mit deren Zylinder (17) die Pumpe (1-10) verbunden ist und in welchen sie die pastöse Substanz fördert, wobei zwischen der Pumpe (1-10) und dem Zylinder (17) ein Absperrventil (13) vorgesehen ist und die weiterführende Leitung (28) mittelbar oder unmittelbar von dem Zylinder (17) ausgeht,
**dadurch gekennzeichnet, daß** die Pumpe (1-10) mittels einer Zweigleitung (25) außerdem an einen Reservespeicher (26) angeschlossen ist, welcher einen mittelbar oder unmittelbar mit der weiterführenden Leitung (28) verbundenen Speicherraum (31) hat, dessen Fassungsvermögen klein ist gegen das Fassungsvermögen des Gebindes (11) und welcher beim Wechseln des Gebindes (11) geleert werden kann.

2. Vorrichtung nach Anspruch 1, **dadurch gekennzeichnet, daß** der Speicherraum (31) des Reservespeichers (26) mit dem Zylinder (17) der ersten Kolben-Zylinder-Einheit (18) verbunden ist.

3. Vorrichtung nach Anspruch 1 oder 2, **dadurch gekennzeichnet, daß** der Reservespeicher (26) eine zweite Kolben-Zylinder-Einheit ist.

4. Vorrichtung nach einem der vorstehenden Ansprüche, **dadurch gekennzeichnet, daß** das Absperrventil (13) ein 4/2-Wegeventil ist.

5. Vorrichtung nach einem der vorstehenden Ansprüche, **dadurch gekennzeichnet, daß** die zum Reservespeicher (26) führende Zweigleitung (25) von dem Absperrventil (13) ausgeht.

6. Vorrichtung nach Anspruch 4 oder 5, **dadurch gekennzeichnet, daß** das Absperrventil (13) ein Drehschieberventil ist, welches einen ersten Kanal (20) hat, welcher quer zur Drehachse (32) des Drehschiebers (15) verläuft und in seiner Offenstellung das Gebinde (11) mit dem Zylinder (17) der ersten Kolben-Zylinder-Einheit (18) verbindet,
und einen zweiten Kanal (24) hat, welcher koaxial zur Drehachse (32) des Drehschiebers (15) in diesem verläuft und den ersten Kanal (20) mit dem Reservespeicher (26) verbindet.

7. Vorrichtung nach einem der vorstehenden Ansprüche, **dadurch gekennzeichnet, daß** zwischen dem Zylinder (17) der ersten Kolben-Zylinder-Einheit (18) und der weiterführenden Leitung (28) ein erstes Rückschlagventil (29) liegt, welches in Richtung gegen den Zylinder (17) der ersten Kolben-Zylinder-Einheit (18) sperrt.

8. Vorrichtung nach einem der vorstehenden Ansprüche, **dadurch gekennzeichnet, daß** zwischen dem Zylinder (17) der ersten Kolben-Zylinder-Einheit (18) und dem Reservespeicher (26) ein zweites Rückschlagventil (30) liegt, welches in Richtung gegen den Reservespeicher (26) sperrt.

9. Vorrichtung nach einem der vorstehenden Ansprüche, **dadurch gekennzeichnet, daß** das Gebinde (11) ein Faß und die Pumpe (1-10) eine Kolbenpumpe ist, deren Kolben (10) in seinem Durchmesser dem Durchmesser des Fasses angepaßt ist, so daß er in das an seinem einen Ende geöffnete Faß eintauchen und die pastöse Substanz durch einen im Kolben (10) vorgesehenen Durchgang (12) aus dem Faß pressen kann.

10. Vorrichtung nach Anspruch 9, **dadurch gekennzeichnet, daß** die erste Kolben-Zylinder-Einheit (18) und der Reservespeicher (26) beide auf dem Kolben (10) der Pumpe (1-10) angeordnet sind.

11. Verfahren zum Betreiben der Vorrichtung nach einem der vorstehenden Ansprüche, **dadurch gekennzeichnet, daß** der Reservespeicher (26) erst gefüllt wird, wenn die pastöse Substanz in dem Gebinde (11) zur Neige geht.

12. Verfahren nach Anspruch 11, **dadurch gekennzeichnet, daß** die pastöse Substanz erst dann aus dem Reservespeicher (26) gefördert wird, wenn aus dem Gebinde (11) keine pastöse Substanz mehr herausgepumpt werden kann.
